# EUROPEAN PATENT SPECIFICATION

(11) **EP 2 463 117 B1**
(45) Date of publication and mention of the grant of the patent: **17.07.2013**
(21) Application number: 10194604.4
(22) Date of filing: 10.12.2010
(51) Int. Cl.: B60B 1/04, B60B 5/02, B60B 21/06

(54) **Composite material wheel rim structure**
Radfelgenstruktur aus Verbundstoffmaterial
Structure de jante de roue en matériau composite

(43) Date of publication of application: 13.06.2012
(73) Proprietor: Taiwan Hodaka Industrial Co., Ltd., Chinese Taipei (TW)
(72) Inventor: Lin, Shih-Hung, Tainan County (TW)
(74) Representative: Desrois, Julie

(56) References cited:
- EP-A2- 1 386 756
- FR-A1- 2 702 707
- US-A- 5 975 645
- US-A1- 2007 102 995

## Description

### BACKGROUND OF THE INVENTION

### Field of the Invention

This invention relates generally to a composite material wheel rim structure and more specifically to one, where an inner rim surface of the composite material wheel rim is connected by each spoke, and the spot for the connection is capable of sustaining the destruction by the drilling of a threaded hole, which is for helical joining to an attachment cap of the spoke and for the adjustment of the tightness of the spoke.

### Description of the Prior Art

As for bike wheel rim, its outer rim surface joins the tire, and its inner rim surface links up the wheel hub in the center of the wheel rim through a radial arrangement of spokes. The spoke is capable of being adjusted for its tightness. And the connection between the spoke and the inner rim surface of the wheel rim is carried out by joining an attachment cap helically to a threaded hole, where the attachment cap is provided with threads on its external side and is located at one end of a spoke, while the threaded hole is located at a corresponding location at the inner rim surface of the wheel rim. By adjusting the depth that the attachment cap is joined helically to the threaded hole, the tightness of a spoke will follow suit. Composite materials feature lightweight and tenacity in nature, which is also the preferred selection of substance for the bike frame. However, once the composite material is used to produce the wheel rim, it would suffer the drawbacks of insufficient stress for sustaining the drilling of threaded holes at the inner rim surface of the composite material wheel rim, where the threaded hole is for the accommodation of the attachment cap of a spoke. And cracks are easily created at the spot around the drilling at the inner rim surface of the composite material wheel rim.

Documents EP 1386756 A2, US 5975645 and US 2007/0102995 A1 all disclose a composite material wheel rim structure and a method for manufacturing a composite material wheel rim according to the preamble of claim 1 and claim 3, respectively.

### SUMMARY OF THE INVENTION

In the light of the aforementioned drawbacks of the prior art, this inventor conceived the idea for the advanced improvement, and eventually the endeavors gave birth to this invention.

The obj ective of this invention is therefore to provide a composite material wheel rim structure, where the composite material wheel rim is connected by each spoke, and the spot for the connection is capable of sustaining the destruction by the drilling of a threaded hole.

This invention features: the inner rim surface of the composite material wheel rim is linked by the attachment cap of each spoke, and a rigid inner lining chunk is being enwrapped by the inner rim surface during the shaping of the composite material wheel rim, which enables the drilling of threaded holes at the inner lining chunk. As the inner lining chunk is used to sustain the destruction by the drilling of the threaded holes and the strain by the insertion of the attachment caps to the spokes, the inner rim surface of the composite material wheel rim is then favorably to be drilled for the threaded holes, where the threaded hole is for the helical joining to the attachment cap of each spoke and for the adjustment of the tightness of the spoke.

### BRIEF DESCRIPTION OF THE DRAWINGS

FIG.1 is a sectional view of an exemplary embodiment of this invention before a threaded hole is drilled;
FIG. 2 is a sectional view of FIG. 1 viewing from the line 2-2;
FIG. 3 is a sectional view of a right-slanted threaded hole of the exemplary embodiment of this invention;
FIG. 4 is a sectional view of FIG. 3 viewing from the line 4-4;
FIG. 5 is a sectional view of a left-slanted threaded hole of the exemplary embodiment of this invention;
FIG. 6 is a sectional view of FIG. 5 viewing from the line 6-6;
FIG. 7 is an exploded view of a spoke and the composite material wheel rim of the exemplary embodiment of this invention;
FIG. 8 is a joining view (I) of the spoke and the composite material wheel rim of the exemplary embodiment of this invention; and
FIG. 9 is a joining view (II) of the spoke and the composite material wheel rim of the exemplary embodiment of this invention.

### DETAILED DESCRIPTION OF THE INVENTION

To achieve the foregoing objects of the present invention, the techniques adopted and the achievable function are detailed described with reference to the following preferred exemplified embodiments and the accompanying drawings, which would help the honorable Examiner to get a thorough comprehension.

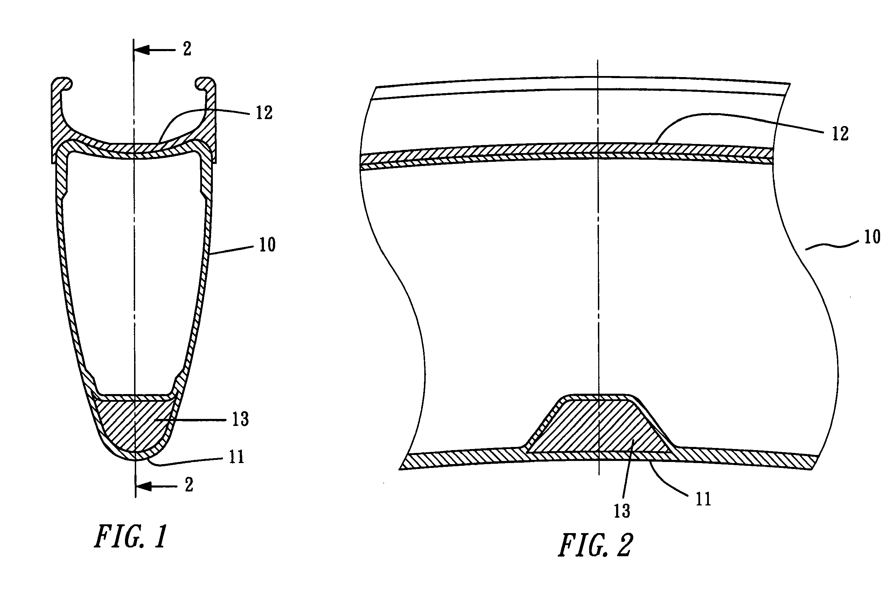

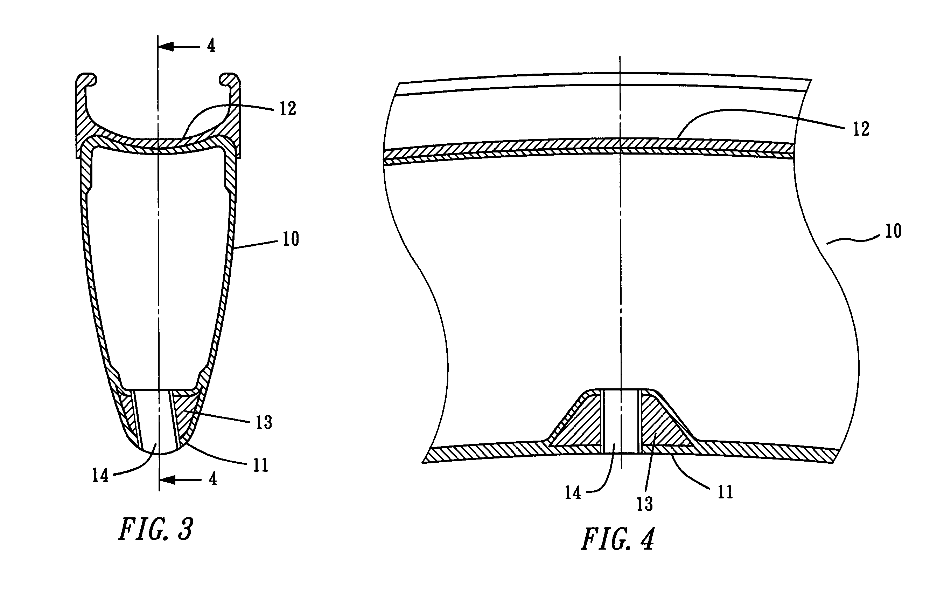

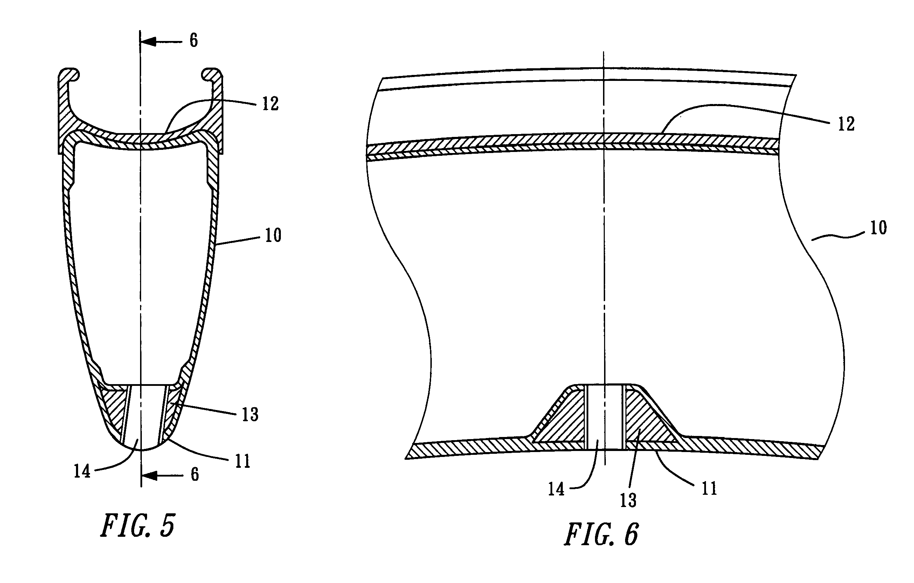

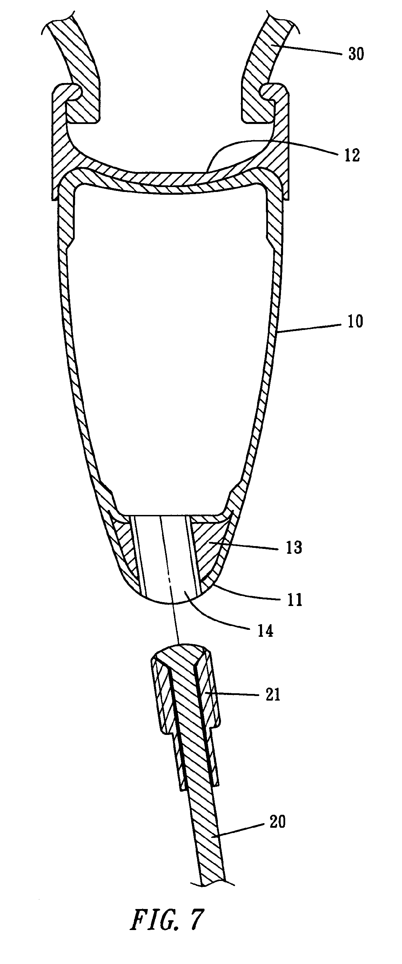

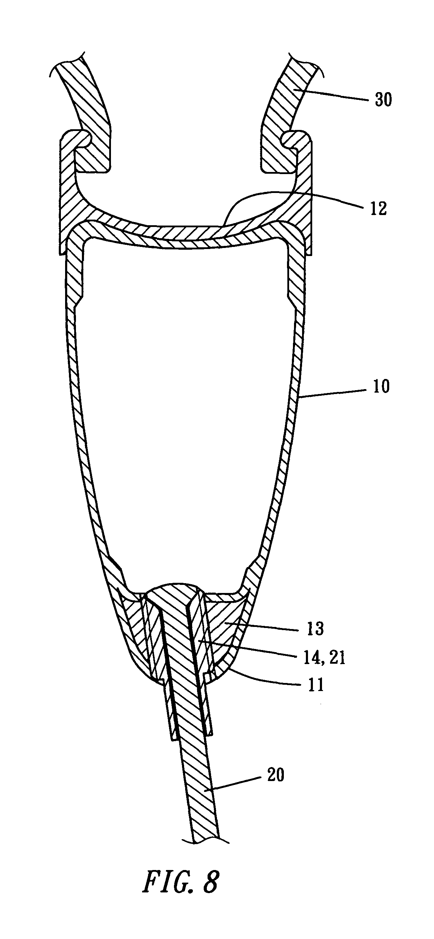

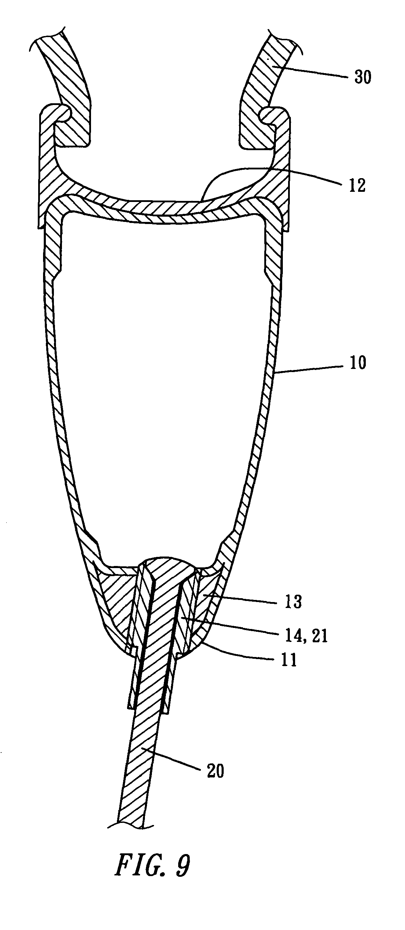

Referring to FIGS. 1 & 2, the composite material wheel rim 10 of the embodiment of this invention is provided with an inner rim surface 11 and an outer rim surface 12. The inner rim surface 11 joins the wheel hub by spokes 20 (shown in FIG. 7), while the outer rim surface 12 is to wear a tire 30. The inner rim surface 11 of the composite material wheel rim 10 links to an attachment cap 21 built at the one end of a spoke 20 to the rim, and a corresponding rigid inner lining chunk 13 (for instance: metallic substance or rigid plastics) is enwrapped by the inner rim surface 11 during the shaping of the composite material wheel rim 10, which enables the drilling of threaded holes 14 at the inner lining chunk 13, and the inner lining chunk 13 is used for the sustaining of the destruction due to the drilling for the threaded holes 14 and of the strain due to the linking of the attachment caps 21 of the spokes 20 (shown in FIGS. 3 - 6). The orientation of a threaded hole 14 of the inner rim surface 11 of the composite material wheel rim 10 is coordinately adjusted subject to the alignment of a spoke 20 of the wheel hub as shown in FIGS. 3 & 5. As the attachment cap 21 of a spoke 20 joins the threaded hole 14 of the inner rim surface 11 of the composite material wheel rim 10, shown in FIGS. 7 - 9, the attachment cap 21 of a spoke 20 is actually in threaded connection with the threaded hole 14, and the tightness of a spoke 20 is subject to the depth that the attachment cap 21 joined helically to the threaded hole 14.

Accordingly, this invention exploits an inner lining chunk 13 enwrapped by the inner rim surface 11 of the composite material wheel rim 10 for the favorable drilling of the corresponding threaded hole 14 that joins helically to the attachment cap 21 of a spoke 20, which enables a handy drilling for the threaded holes 14 at the inner rim surface 11 of the composite material wheel rim 10, where this invention is therefore construed as creativeness and practicality, which conforms to the requirements of patent application.

## Claims

1. A composite material wheel rim structure, having an inner rim surface (11) and an outer rim surface (12), where the inner rim surface (11) is intended to be joined to a wheel hub by spokes (20) and the outer rim surface (12) is intended to wear a tire (30), the inner rim surface (11) of the composite material wheel rim (10) being intended to be linked to an attachment cap (21) of each spoke (20), and a plurality of rigid inner lining chunks (13) being enwrapped by the inner rim surface (11) during the shaping of the composite material wheel rim (10), the attachment cap (21) of each spoke (20) being intended to be in threaded connection with the corresponding inner lining chunk (13), **characterized in that** the inner lining chunks (13) are solid, which enables then the drilling of threaded holes (14) at the inner lining chunks (13), the inner lining chunks (13) being used for the sustaining of the destruction due to the drilling for the threaded holes (14) and of the strain due to the link of the attachment caps of the spokes (20).

2. A composite material wheel rim structure as in claim 1 wherein each inner lining chunk (13) is made of metallic substance.

3. A method for manufacturing a composite material wheel rim (10) using a composite material wheel rim structure as defined in any one of claims 1 and 2, comprising the step of providing a composite material wheel rim structure having an inner rim surface (11) and an outer rim surface (12), where the inner rim surface (11) is intended to be joined to a wheel hub by spokes (20) and the outer rim surface (12) is intended to wear a tire (30), the inner rim surface (11) of the composite material wheel rim (10) being intended to be linked to an attachment cap (21) of each spoke (20), **characterized in that** it further comprises the step of enwrapping a plurality of solid inner lining chunks (13) in the inner rim surface (11) during the shaping of the composite material wheel rim (10), and the subsequent step of drilling threaded holes (14) at the inner lining chunks (13), the inner lining chunks (13) being used for the sustaining of the destruction due to the drilling for the threaded holes (14) and of the strain due to the link of the attachment caps of the spokes (20).

4. The method for manufacturing a composite material wheel rim (10) as in claim 3 wherein the orientation of a threaded hole (14) is coordinately adjusted subject to the alignment of a spoke (20).

## Patentansprüche

1. Verbundwerkstoff-Radfelgenstruktur, die eine Felgeninnenfläche (11) und eine Felgenaußenfläche (12) aufweist, wobei die Felgeninnenfläche (11) dafür bestimmt ist, mit Speichen (20) mit einer Radnabe verbunden zu werden, und die Felgenaußenfläche (12) dafür bestimmt ist, einen Reifen (30) zu tragen, wobei die Felgeninnenfläche (11) der Verbundwerkstoff-Radfelge (10) dafür bestimmt ist, mit einer Befestigungskappe (21) jeder Speiche (20) verbunden zu werden, und eine Vielzahl starrer innerer Füllstücke (13), die während des Formens der Verbundwerkstoff-Radfelge (10) von der Felgeninnenfläche (11) umhüllt werden, wobei die Befestigungskappe (21) jeder Speiche (20) dafür ausgelegt ist, mit dem entsprechenden inneren Füllstück (13) eine Schraubverbindung einzugehen, **dadurch gekennzeichnet, dass** die inneren Füllstücke (13) massiv sind, was dann das Bohren von Gewindebohrungen (14) in den inneren Füllstücken (13) ermöglicht, wobei die inneren Füllstücke (13) dafür verwendet werden, die Zerstörung durch das Bohren für die Gewindebohrungen (14) und die Beanspruchung durch das Verbinden mit den Befestigungskappen der Speichen (20) auszuhalten.

2. Verbundwerkstoff-Radfelgenstruktur nach Anspruch 1, wobei jedes innere Füllstück (13) aus Metallwerkstoff hergestellt ist.

3. Verfahren zum Herstellen einer Verbundwerkstoff-Radfelge (10) unter Verwendung einer in einem der Ansprüche 1 und 2 definierten Verbundwerkstoff-Radfelgenstruktur, umfassend den Schritt des Bereitstellens einer Verbundwerkstoff-Radfelgenstruktur, die eine Felgeninnenfläche (11) und eine Felgenaußenfläche (12) aufweist, wobei die Felgeninnenfläche (11) dafür bestimmt ist, mit Speichen (20) mit einer Radnabe verbunden zu werden, und die Felgenaußenfläche (12) dafür bestimmt ist, einen Reifen (30) zu tragen, wobei die Felgeninnenfläche (11) der Verbundwerkstoff-Radfelge (10) dafür bestimmt ist, mit einer Befestigungskappe (21) jeder Speiche (20) verbunden zu werden, **dadurch gekennzeichnet, dass** es ferner den Schritt des Umhüllens einer Vielzahl starrer innerer Füllstücke (13) in der Felgeninnenfläche (11) während des Formens der Verbundwerkstoff-Radfelge (10) umfasst, und den anschließenden Schritt des Bohrens von Gewindebohrungen (14) in den inneren Füllstücken (13), wobei die inneren Füllstücke (13) dafür verwendet werden, die Zerstörung durch das Bohren für die Gewindebohrungen (14) und die Beanspruchung durch das Verbinden mit den Befestigungskappen der Speichen (20) auszuhalten.

4. Verfahren zum Herstellen einer Verbundwerkstoff-Radfelge (10) nach Anspruch 3, wobei die Ausrichtung einer Gewindebohrung (14) abhängig von der Ausrichtung einer Speiche (20) abgestimmt angepasst wird.

## Revendications

1. Structure de jante de roue en matériau composite, ayant une surface de jante intérieure (11) et une surface de jante extérieure (12), la surface de jante intérieure (11) étant destinée à être reliée à un moyeu de roue par des rayons (20) et la surface de jante extérieure (12) étant destinée à porter un pneu (30), la surface de jante intérieure (11) de la jante de roue en matériau composite (10) étant destinée à être liée à un capuchon de fixation (21) de chaque rayon (20), et une pluralité de segments de revêtement intérieur rigides (13) étant enveloppés par la surface de jante intérieure (11) durant la mise en forme de la jante de roue en matériau composite (10), le capuchon de fixation (21) de chaque rayon (20) étant destinée à être en liaison par filetage avec le segment de revêtement intérieur correspondant (13), **caractérisée par le fait que** les segments de revêtement intérieur (13) sont pleins, ce qui permet ensuite le perçage de trous taraudés (14) dans les segments de revêtement intérieur (13), les segments de revêtement intérieur (13) étant utilisés pour la résistance à la destruction due au perçage des trous taraudés (14) et à la contrainte due à la liaison des capuchons de fixation des rayons (20).

2. Structure de jante de roue en matériau composite selon la revendication 1, dans laquelle chaque segment de revêtement intérieur (13) est fait d'une substance métallique.

3. Procédé de fabrication d'une jante de roue en matériau composite (10) utilisant une structure de jante de roue en matériau composite selon l'une quelconque des revendications 1 et 2, comprenant l'étape de fourniture d'une structure de jante de roue en matériau composite ayant une surface de jante intérieure (11) et une surface de jante extérieure (12), la surface de jante intérieure (11) étant destinée à être reliée à un moyeu de roue par des rayons (20) et la surface de jante extérieure (12) étant destinée à porter un pneu (30), la surface de jante intérieure (11) de la jante de roue en matériau composite (10) étant destinée à être liée à un capuchon de fixation (21) de chaque rayon (20), **caractérisé par le fait qu'**il comprend en outre l'étape d'enveloppement d'une pluralité de segments de revêtement intérieur pleins (13) dans la surface de jante intérieure (11) durant la mise en forme de la jante de roue en matériau composite (10), et l'étape subséquente de perçage de trous taraudés (14) dans les segments de revêtement intérieur (13), les segments de revêtement intérieur (13) étant utilisés pour la résistance à la destruction due au perçage pour les trous taraudés (14) et à la contrainte due à la liaison des capuchons de fixation des rayons (20).

4. Procédé de fabrication d'une jante de roue en matériau composite (10) selon la revendication 3, dans lequel l'orientation d'un trou taraudé (14) est ajustée de manière coordonnée, en fonction de l'alignement d'un rayon (20) .
